# EUROPÄISCHE PATENTSCHRIFT

(11) **EP 2 428 334 B1**
(45) Veröffentlichungstag und Bekanntmachung des Hinweises auf die Patenterteilung: **12.06.2013**
(21) Anmeldenummer: 11007127.1
(22) Anmeldetag: 02.09.2011
(51) Int. Cl.: B25J 3/04, G21F 7/06

(54) **Vorrichtung mit einer Antriebseinheit zum Antrieb eines Manipulatorarms eines Manipulators und Manipulator**
Device with a drive unit for powering a manipulator arm of a manipulator and manipulator
Dispositif doté d'une unité d'entraînement d'un bras de manipulateur et manipulateur

(30) Priorität: 08.09.2010 DE 202010012232 U
(43) Veröffentlichungstag der Anmeldung: 14.03.2012
(73) Patentinhaber: Wälischmiller Engineering GmbH, 88677 Markdorf (DE)
(72) Erfinder: Guth, Christoph, 88690 Uhldingen-Mühlhofen (DE); Maier, Richard, 88697 Bermatingen (DE); Matt, Peter, 88682 Salem (DE)
(74) Vertreter: Dobler, Markus

(56) Entgegenhaltungen:
- EP-A2- 0 078 113
- FR-A1- 2 667 532
- FR-A1- 2 866 826
- FR-A1- 2 931 092
- JP-A- 1 210 279

## Beschreibung

### Stand der Technik:

Aus dem Bereich der Robotik sind Manipulator für unterschiedlichste Einsatzgebiete bekannt. Dabei führt ein beweglicher Manipulatorarm mechanische Arbeiten in schwieriger bzw. gefährlicher Umgebung durch. Beispielsweise werden Manipulatoren zur Handhabung von gefährlichen Stoffen in abgeschlossenen Räumen eingesetzt, beispielsweise bei Wartungs- oder Reparaturarbeiten in Bereichen, die Strahlungen ausgesetzt sind. Manipulatoren können beispielsweise als sogenannte Master-Slave-Manipulatoren ausgebildet sein, welche manuell bedient werden. Als Alternative kann eine Person zur Bewegungsführung auf eine Bedieneinheit einwirken. Als weitere Alternative ist auch ein z. B. automatisierter Betrieb mittels einer Software bzw. ohne Personenführung möglich.

Manipulatorenarme umfassen in der Regel einen Manipulator-oder Arbeitsarm mit mehreren Gelenken und/oder Teleskopen mit einer Greifeinheit am freien Ende des Manipulatorenarms. Des Weiteren ist eine Durchführeinheit durch eine Wand vorhanden, die einen Arbeitsraum, in welchen der Arbeitsarm hineinreicht, von einem unkritischen Raum trennt. Ober die Durchführeinheit ist eine Antriebseinheit des Manipulators, die zweckmäßigerweise im unkritischen Raum angeordnet ist, mit dem Arbeitsarm verbunden.

Eine Vorrichtung gemäß dem Oberbegriff des Anspruchs 1 ist aus den Dokument EP 0 078 113 A2 bekannt.

### Aufgabe und Vorteile der Erfindung:

Aufgabe der vorliegenden Erfindung ist es, eine Anordnung der einleitend genannten Art bereitzustellen, mit der ein Manipulator flexibel einsetzbar bzw. im Hinblick auf wirtschaftliche und technische Gesichtspunkte vorteilhaft ausgebildet ist. Insbesondere soll die Anbindung der Antriebseinheit technisch vorteilhaft und zeitsparend möglich sein.

Diese Aufgabe wird durch den unabhängigen Anspruch 1 gelöst.

Die abhängigen Ansprüche betreffen vorteilhafte Varianten der Erfindung.

Die Erfindung geht aus von einer Vorrichtung mit einer Antriebseinheit zum Antrieb eines Manipulatorarms eines Manipulators, wobei der Manipulatorarm und die Antriebseinheit im Betrieb des Manipulators durch einen Trennabschnitt getrennt sind, durch welchen sich ein drehbares Durchführelement des Manipulators zur Kopplung der Antriebseinheit mit dem Manipulatorarm erstreckt, wobei die Antriebseinheit mehrere Antriebskomponenten umfasst. Der Manipulator- bzw. Greifarm ist an einem Ende des Durchführelements aufgenommen, wobei das Durchführelement für eine Drehung des Manipulatorarms um eine horizontale Achse selbst drehantreibbar ist. Die angetriebene Bewegung des Manipulatorarms bzw. aller Teilkomponenten des Manipulatorarms in allen räumlichen Richtungen erfolgt mit der Drehung des Durchführelements und mittels weiterer durch das Durchführelement verlaufende angetriebene Wellen, die von dazugehörigen Antriebskomponenten der Antriebseinheit angetrieben drehbar sind. Die Antriebseinheit kann insbesondere mehrere Antriebskomponenten zum Beispiel Antriebsmotoren umfassen.

Ein Antriebsblock der Antriebseinheit ist derart ausgebildet, dass der Antriebsblock an dem Durchführelement und/oder einer Verlängerung des Durchführelements fest aufnehmbar ist und im zusammengebauten Zustand des Manipulators der Antriebsblock und das Durchführelement durch einen Drehantrieb des Antriebsblocks gemeinsam drehbar sind, wobei ein Getriebe zur Übertragung einer Drehbewegung auf den Antriebsblock einen drehfest positionierten Getriebering umfasst. Der Getriebering ist bevorzugt Teil der Antriebseinheit bzw. insbesondere nicht Teil des Durchführelements. Mit der vorgeschlagenen Anordnung ist es insbesondere möglich, die Antriebseinheit mit dem Antriebsblock und dem Getriebe als eine Baueinheit auszubilden, welche problemlos und in vergleichsweise kurzer Zeit am Durchführelement montierbar bzw. von diesem demontierbar ist. Die Antriebseinheit kann insbesondere an entsprechend ausgebildeten Gegenabschnitten des Durchführelements und/oder dessen Verlängerung bzw. ggf. zusätzlich an einem anderen festen Abschnitt wie z. B. dem Trennabschnitt angeflanscht bzw. angeschraubt werden. Über die ggf. vorhandene Verlängerung des Durchführelements kann die montierte Antriebseinheit vom Trennabschnitt zum Beispiel einer Trennwand beabstandet sein, was im Hinblick auf die Zugänglichkeit für die Montage und Demontage vorteilhaft sein kann.

Im oder am Antriebsblock sind vorteilhafterweise sämtliche Antriebskomponenten bzw. Antriebsmotoren und ggf. dazugehörige Zusatzkomponenten wie Getriebe und Kupplungen und dergleichen für die angetriebenen Wellen des Manipulators untergebracht. Wird im Betrieb des Manipulators der Antriebsblocks drehangetrieben bewegt, drehen sich demgemäß auch sämtliche Antriebskomponenten samt Zusatzkomponenten mit.

Bei bekannten Anordnungen mit stationären Antriebsmotoren ist zur Lagerung eine komplexe Lagerung mit in der Praxis zum Beispiel vier Lagerstellen nötig. Damit wird eine vergleichsweise aufwändige Lagerung realisiert, die zudem meist überbestimmt ist. Demgegenüber erfolgt erfindungsgemäß die wesentliche Lagerfunktion für die Drehbewegung des Antriebsblocks über ohnehin vorhandene Drehlager des Durchführelements im Bereich des Trennabschnitts, wozu in der Regel zwei Lagerstellen ausreichen.

Für den Drehantrieb des Durchführelements samt Antriebsblock wird das Drehmoment mittels der Anordnung des drehfest positionierten Getrieberings und einer dazugehörigen Antriebskomponente mit Getriebeteil aufgebracht. An dem Getriebering stützt sich der Antriebsblock aufgrund der Abstützung an den Durchführelementlagern vergleichsweise schwach abrollend ab, wobei ein nahezu spielfreier und präziser Antrieb möglich ist, was weiter unten noch detailliert erläutert ist.

Ein wesentlicher Aspekt der Erfindung ist darin zu sehen, dass eine Lageranordnung zur Lagerung des drehfest positionierten Getrieberings relativ zum Antriebsblock vorgesehen ist. Der drehfest positionierte Getriebering wird insbesondere über eine Drehlageranordnung relativ zum Antriebsblock gelagert, sodass die Drehbewegung des Antriebsblocks relativ zum drehfesten Getriebering ermöglicht wird. Die Abstützung des drehbaren Antriebsblocks erfolgt jedoch überwiegend über die Lagerung des Durchführelements des Manipulators.

Es ist vorteilhaft, dass aufgrund der Lagerung des Antriebsblocks über die Lager des Durchführelements, der Anteil der Lagerbelastungen auf die Lageranordnung für den Getriebering, die durch die Masse der Antriebseinheit bedingt ist, relativ gering ist.

Die Lageranordnung des Getrieberings kann insbesondere ein Wälz- oder Gleitlager sein, wobei die Achse des Getrieberings bzw. die Achse mit dem bereitgestellten Wälz- oder Gleitlager fluchtend verläuft mit der Drehachse des Durchführelements im Trennabschnitt.

Es ist vorteilhaft, dass die Antriebseinheit einen feststehenden Gehäuseabschnitt und einen gegenüber dem Gehäuseabschnitt drehbar gelagerten Antriebsblock umfasst, wobei eine räumlich bewegbare Versorgungsführung für eine oder mehrere Versorgungsleitungen zur Versorgung der Antriebseinheit vorgesehen ist und wobei ein Ende der Versorgungsführung an dem Antriebsblock und ein anderes Ende der Versorgungsführung an dem Gehäuseabschnitt fixiert ist. Damit kann eine insbesondere elektrische Versorgung der sich drehenden Antriebskomponenten vorteilhaft realisiert werden. Zur Versorgungsführung werden räumlich bewegliche Energieketten verwendet. Mit der Unterbringung zwischen dem feststehenden Gehäuseabschnitt und dem drehbar gelagerten Antriebsblock kann die Energiekette gegen Verschmutzungen bzw. Beschädigungen geschützt werden. Außerdem kann durch die überdeckte bzw. ggf. gekapselte Anordnung der sich im Betrieb des Manipulators ggf. räumlich bewegenden Energieketten keine Gefahr insbesondere für Personen oder andere Maschinenteile im Nahbereich der Antriebseinheit ausgehen.

Des Weiteren ist es möglich, besonders kompakt zu bauen. Durch die Unterbringung innerhalb der Antriebseinheit kann die Energiekette nicht in ggf. vorhandene Sichtfenster in dem Trennabschnitt hineinragen und ermöglichen eine ungehinderte Sicht auf den Manipulatorarm beispielsweise für eine visuelle Kontrolle.

Vorteilhafterweise kann die Antriebseinheit an einer Wand in der Nähe einer an die Wand oben anschließenden Decke positioniert werden.

Bisher ist dies kaum möglich, da ein größerer Mindestabstand zur Decke aufgrund einer räumlich ausladenden Anordnung der Energieketten, die außerhalb der Antriebseinheit vorhanden sind, einzuhalten ist.

Außerdem ist es vorteilhaft, dass sämtliche Antriebskomponenten der Antriebseinheit am oder im Antriebsblock vorhanden sind. So können mit dem Antriebsblock bzw. in einer Baueinheit sämtliche Antriebseinheiten aufgenommen sein. Die gesamte Anordnung der Antriebseinheit ist damit vorteilhaft an dem Durchführelement montier- bzw. demontierbar. Die Antriebskomponenten der Antriebseinheit sind bevorzugt elektrische, hydraulische oder pneumatische Antriebskomponenten. Bevorzugt werden Elektromotoren eingesetzt.

Es ist überdies vorteilhaft, dass zur Übertragung einer Drehbewegung auf den Antriebsblock ein von einer ersten Antriebskomponente des Antriebsblocks antreibbares Ritzel vorhanden ist, das für eine Drehmomentübertragung auf den Antriebsblock am Getriebering abrollt. Das Ritzel ist beispielsweise an einer Abtriebswelle, eines Antriebsmotors vorhanden, wobei die Zahnung des Ritzels auf die Zahnung am Getriebering abgestimmt ist.

Weiter wird vorgeschlagen, dass der Getriebering eine Öffnung bereitstellt, durch welche sich ein Verbindungsstrang zur Kopplung der Antriebseinheit mit dem Durchführelement erstreckt. Insbesondere ist die Öffnung durch einen umfänglich verlaufenden Abschnitt des Getrieberings mit einem Zahnabschnitt zum Eingreifen des Ritzels in dem Zahnabschnitt ausgebildet. So kann besonders kompakt die Anordnung der Durchführung bzw. Kopplung zwischen Antriebseinheit und Durchführelement realisiert werden.

In einer vorteilhaften Modifikation des Erfindungsgegenstandes umfasst der Getriebering einen Zahnkranz, an dem bei der Drehbewegung des Antriebsblocks das antreibbare Ritzel abrollt. So kann eine präzise und ruckfreie Antriebsübertragung von der ersten Antriebskomponente auf den Antriebsblock realisiert werden. Außerdem ist dies für eine präzise Drehbewegung in beide Drehrichtungen vorteilhaft.

Es ist jedoch nicht ausgeschlossen, dass anstelle des direkten Eingreifens des Ritzels in den Zahnkranz des Getrieberings ein zwischen diesen wirkendes Zwischenelement, beispielsweise ein Zahnriemen oder eine Kette, vorgesehen ist.

Vorteilhafterweise weist der Antriebsblock ein Gehäuse auf, an dem außen die erste Antriebskomponente vorhanden ist und innerhalb des Gehäuses die sämtlichen weiteren Antriebskomponenten untergebracht sind. Damit kann sehr kompakt bauend die Antriebseinheit samt Antriebsblock realisiert werden. Lediglich die erste Antriebskomponente liegt ggf. außerhalb des Gehäuses des Antriebsblocks. Zum Schutz aller Antriebskomponenten ist es jedoch nicht ausgeschlossen, dass auch die erste Antriebskomponente innerhalb des Gehäuses des Antriebsblocks positioniert ist.

Bevorzugt ist in einem Zwischenraum zwischen dem Gehäuseabschnitt der Antriebseinheit und dem Gehäuse des Antriebsblocks die Versorgungsführung untergebracht. Auch dies ist besonders kompakt und im Hinblick auf einen Schutz der Versorgungsführung vorteilhaft. Die Größe des Zwischenraums kann individuell auf die Außenmaße der Versorgungsführung abgestimmt sein.

Bevorzugt ist der Getriebering über die Lageranordnung derart aufgenommen, dass eine Kontaktfläche des Getrieberings, die bei der Drehbewegung des Antriebsblocks mit dem Ritzel, das von der ersten Antriebskomponente antreibbar ist, in Kontakt steht, in radialer Verlängerung zur Lageranordnung positioniert ist. So ist eine vorteilhafte Getriebefunktion realisierbar bzw. eine exakte Einstellung eines vergleichsweise geringen Lagerspiels bzw. Getriebespiels zwischen dem Ritzel und dem Zahnkranz des Getrieberings möglich.

Weiter wird vorgeschlagen, dass eine mit Gelenkmitteln versehene Drehmomentstütze für eine Abstützung der Antriebseinheit an einem feststehenden Abstützabschnitt vorgesehen ist, mit welcher im montierten Zustand der Antriebseinheit eine geringe Ausgleichsbewegung zwischen der Antriebseinheit relativ zu dem Abstützabschnitt möglich ist. Mit der Drehmomentstütze können geringe Ausgleichbewegungen während des drehenden Betriebs des Antriebsblocks ausgeglichen werden.

Zusätzlich sind z. B. elektrische Anschlüsse insbesondere mittels Steckkontakten verbunden, was unabhängig von der Drehmomentstütze erfolgt. Insgesamt ermöglicht dies insbesondere ein schnelles Umbauen der Antriebseinheit, was Zeit und Kosten bei Wartung oder Reparatur spart.

Die Erfindung betrifft außerdem einen Manipulator mit einem Manipulatorarm und einer Antriebseinheit zum Antrieb des Manipulatorarms, wobei der Manipulatorarm und die Antriebseinheit im Betrieb des Manipulators durch einen Trennabschnitt getrennt sind, durch welchen sich ein Durchführelement des Manipulators zur Kopplung der Antriebseinheit mit dem Manipulator erstreckt. Erfindungsgemäß ist eine der vorbeschriebenen Vorrichtungen an dem Manipulator vorgesehen. Damit lassen sich die bereits oben diskutierten Vorteile bei einem Manipulator realisieren. Der Manipulator kann beispielsweise von einer Person über ein Bedienpult oder durch automatischen Betrieb mittels einer Software oder anderweitig gesteuert ausgebildet sein.

### Figurenbeschreibung

Weitere Vorteile und Merkmale der Erfindung werden anhand eines stark schematisiert gezeigten Ausführungsbeispiels der Erfindung näher erläutert. Im Einzelnen zeigt:
- Figur 1: einen Teil eines erfindungsgemäßen Manipulators mit einer Antriebseinheit zum Antrieb eines Manipulatorarms in Seitenansicht mit geschnitten dargestellter Trennwand, an welcher der Manipulator angeordnet ist,
- Figur 2: einen Ausschnitt der Anordnung gemäß Figur 1 mit der Antriebseinheit, wobei ein Gehäuse der Antriebseinheit im Schnitt dargestellt ist,
- Figur 3: einen Ausschnitt der Anordnung gemäß Figur 1 und 2 in einer perspektivische Ansicht auf einen Bereich einer Verbindung der Antriebseinheit mit einem durch eine Trennwand sich erstreckenden Durchführelement und
- Figur 4: eine Rückansicht auf die Antriebseinheit gemäß Pfeil P1 in Figur 2 unter Weglassung eines Gehäusedeckels der Antriebseinheit.

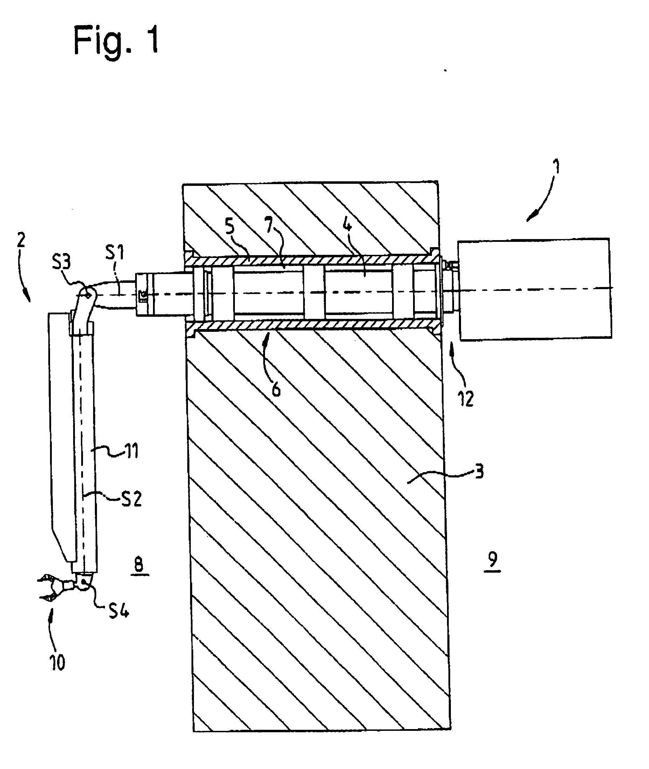

Figur 1 zeigt stark schematisiert einen Teil eines erfindungsgemäßen Manipulators mit einer Antriebseinheit 1 zum Antrieb eines räumlich bewegbaren Manipulatorarms 2 des Manipulators. Die Antriebseinheit 1 und der Manipulatorarm 2 sind im Betrieb des Manipulators durch einen als Wand 3 ausgebildeten Trennabschnitt getrennt. Zur Kopplung der Antriebseinheit 1 mit dem Manipulatorarm 2 erstreckt sich ein drehbares Durchführelement 4 quer durch die Wand 3. Das Durchführelement 4 ist über zum Beispiel zwei nicht näher dargestellte und entlang einer Achse S1 voneinander beabstandete Drehlageranordnung drehbar relativ zum Wandrohr 5. Das Wandrohr 5 ist in einer Durchgangsöffnung 6 der Wand 3 fixiert zum Beispiel eingegossen.

Mit dem eingesetzten endseitig jeweils offenen Wandrohr 5 wird ein hohlzylindrischer Durchlass 7 zwischen einer sogenannten heißen Zelle 8 und einer kalten Zelle 9, die durch die Wand 3 getrennt sind, bereitgestellt. Im eingebauten Zustand des Durchführelements 4 kann zwischen den Zellen 8 und 9 eine insbesondere gas- und strahlendichte Trennung realisiert sein. Die heiße Zelle 8 kann ein Gefahrenbereich darstellen, beispielsweise mit Strahlung, chemisch und/oder biologisch belastet sein. Auf der Seite der heißen Zelle 8 ist der Manipulatorarm 2 vorhanden und in der kalten Zelle 9 die Antriebseinheit 1. Die Wand 3 kann beispielsweise eine Gebäudewand zwischen Räumen eines Gebäudes sein. Grundsätzlich kann anstelle der Wand 3 auch eine mobile Trennwand vorhanden sein.

Nicht dargestellt in Figur 1 sind weitere mit der Antriebseinheit verbundene Einheiten, beispielsweise zur Energieversorgung oder ein Bedienpult zur Bedienung des Manipulators, über welchen ausgeführte manuelle Bewegungen in der kalten Zelle 9 mittels der Antriebseinheit 1 auf den Manipulatorarm 2 übertragbar sind. Auf die Antriebseinheit kann auch z. B. mit einer geeigneten Software bzw. ohne eine Führung durch eine Bedienperson auf eine Bedieneinheit eingewirkt werden, um den Manipulatorarm 2 zu bewegen.

Die in Figur 1 gezeigte Anordnung ist Teil eines Handhabungsgeräts bzw. Manipulators, der beispielsweise zur Handhabung von Gefahrgut bzw. im Bereich von kontaminierten Stoffen, beispielsweise in der Kerntechnik, Verwendung findet. Vorne am räumlich bewegbaren Manipulatorarm 2 ist eine Greifeinheit 10 mit einer Zange vorhanden, welche angetrieben bewegt werden kann, wobei sämtliche Bewegungen des Manipulatorarms 2 über die Antriebseinheit 1 erfolgen. Zur Durchführung von Arbeiten in der heißen Zelle 8 mit der Greifeinheit 10 können daran beispielsweise verschiedene Handhabungswerkzeuge austauschbar angebracht werden.

Der Manipulatorarm 2 ist auf nicht näher beschriebene Weise unterschiedlich verschwenkbar bzw. längenveränderbar. Die Längenveränderung erfolgt insbesondere teleskopisch bezüglich der ersten Achse S1, welche horizontal bzw. zentrisch zum Wandrohr 5 bzw. zum Durchführelement 4 verläuft, bzw. zu einer zweiten Achse S2, welche zentral durch einen Arbeitsarm 11 des Manipulatorarms 2 verläuft. Außerdem ist der Arbeitsarm 11 um eine Gelenkachse S3 verschwenkbar, die senkrecht durch die Achse S1 verläuft. Die Greifeinheit 10, die vorne an einem teleskopisch verschiebbar im Arbeitsarm 11 vorhandenen Abschnitt aufgenommen ist, ist zudem drehbar um die Achse S2, wobei die Greifeinheit 10 in einem Gelenk um eine weitere Achse S4 verschwenkbar ist, die senkrecht zur Achse S2 verläuft. Insgesamt können zum Beispiel sechs Antriebskomponenten für die angetriebene Bewegung des Manipulatorarms in der Antriebseinheit 1 vorhanden sein.

Die Antriebseinheit 1 ist als eine separate Baueinheit bzw. in einer vorteilhaft hantierbaren Form ausgebildet, wobei entsprechende Schnittstellen so ausgestaltet sind, dass die Antriebseinheit 1 jederzeit und problemlos ausgetauscht bzw. von daran anschließenden Elementen des Manipulators getrennt und abgenommen bzw. und wieder angesetzt werden kann. Für eine entsprechende wandseitige Anbindung zum Beispiel am Durchführelement 4 bzw. daran sich anschließenden Elementen ist eine Schnittstelle 12 zwischen der Antriebseinheit 1 und dem Durchführelement 4 eingerichtet.

Insbesondere kann beispielsweise bei einem Manipulator, der anstelle der Antriebseinheit 1 einen Masterarm aufweist und ansonsten gemäß Figur 1 aufgebaut ist, der Masterarm einfach durch die Antriebseinheit 1 ausgetauscht werden. Vorteilhafterweise ist dies mit der gleichen bzw. identisch gestalteten Schnittstelle 12 möglich. Insbesondere sind keine Umbauten am Gebäude bzw. der Wand 3 zum Anbau der Antriebseinheit 1 nötig, bezogen auf die vorherige Anordnung mit dem Masterarm.

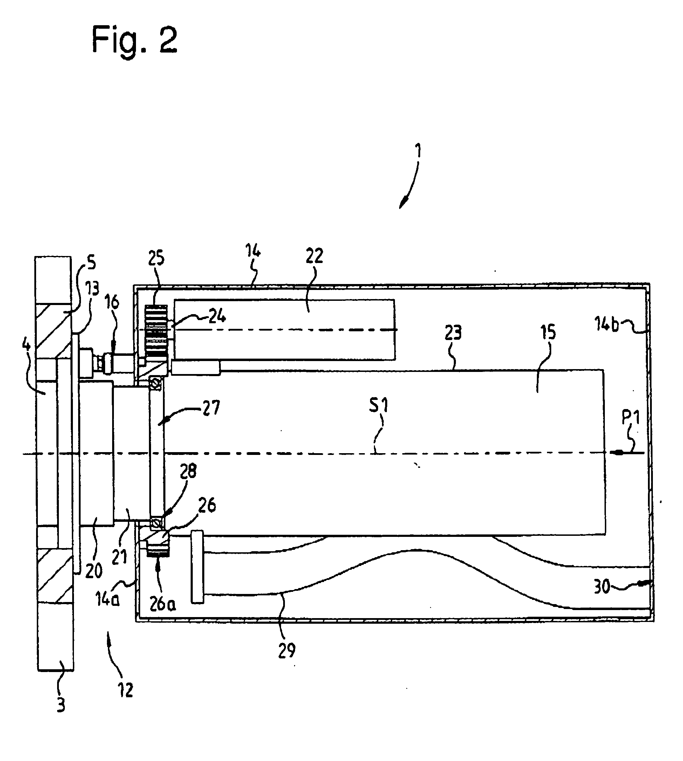

Figur 2 zeigt vergrößert die gehäuseoffene Antriebseinheit 1 gemäß Figur 1 samt Schnittstelle 12 und Teilen der Wand 3, des Wandrohrs 5 und des Durchführelements 4. Zur lösbaren Verbindung der Antriebseinheit 1 an den gezeigten Teilen des Manipulators ist stirnseitig ein am Wandrohr 5 anliegender und über eine Wandebene der Wand 3 überstehender Ring 13 fest fixiert vorgesehen, über den Kräfte zur wandseitigen Abstützung der Antriebseinheit 1 aufnehmbar sind. Durch eine Öffnung des Rings 13 steht eine zylindrische Verlängerung 20 des Durchführelements 4 in Richtung der Antriebseinheit 1 vor. Die Verlängerung 20 ist drehfest verbunden mit dem Durchführelement 4 und im in den Figuren dargestellten montierten Zustand fest verbunden mit dem Antriebsblock 15, was weiter unten noch im Detail beschrieben ist.

Die Antriebseinheit 1 ist außen umschlossen von einem Antriebsgehäuse 14, das beispielsweise zylinderförmig ausgebildet ist und einen Antriebsblock 15 der Antriebseinheit 1 und weitere Komponenten der Antriebseinheit 1 umgibt. Das Antriebsgehäuse 14 ist fixiert und stützt sich am Ring 13 über eine Drehmomentstützenanordnung 16 ab. Die Drehmomentstützenanordnung 16 umfasst eine Schraubverbindung 17 am Ring 13 und eine in Umfangsrichtung zur Achse S1 versetzte Schraubverbindung 18 am Antriebsgehäuse 14, wobei in radialer Richtung bezüglich der Achse S1 ggf. auch ein Versatz der beiden Schraubverbindungen 17 und 18 vorhanden sein kann. Zwischen der Schraubverbindung 17 und der Schraubverbindung 18 ist ein stabförmiges steifes Koppelglied 19 vorhanden, welches endseitig jeweils geschlossene Ringe aufweist, durch welche jeweils zu den Schraubverbindungen 17 und 18 gehörige Schrauben 18a und 19a bei fertig gestellter Verschraubung durchgreifen. Die Enden des Koppelglieds 19 sind in axialer Richtung des Koppelglieds 19 fixiert, wobei eine geringe Verschwenkbewegung des Koppelglieds 19 um die Achsen der Schrauben 18a und 19a möglich ist. So sind geringe Ausgleichbewegungen der Antriebseinheit 1 gegenüber benachbarten Abschnitten insbesondere im Lastbetrieb des Manipulators bei einer Drehbewegung des Durchführelements 4 möglich.

Die Drehmomentstützenanordnung 16 verhindert insbesondere ein Drehen des Getrieberings 26, lässt aber bezüglich weiterer Achsen eine geringe bzw. flexible Bewegung zu, was beispielsweise durch Kugelgelenke realisierbar ist, die ggf. noch komplexere Ausgleichbewegung ermöglichen. Der Aufwand zur Fixierung der Antriebseinheit 1 über die Drehmomentstützenanordnung 16 ist vergleichsweise gering. Wird die Drehmomentstützenanordnung 16 direkt am Durchführelement 4 befestigt, ist keine Änderung der Schnittstelle 12 zur Wand 3 notwendig, um einen kalten Arm bzw. Masterarm durch eine Antriebseinheit bzw. die Antriebseinheit 1 zu ersetzen.

Zum Abnehmen der Antriebseinheit 1 vom Durchführelement 4 sind die beiden Schraubverbindungen 17 und 18 zu lösen und der Anschlussabschnitt 21 von der Verlängerung 20 abzunehmen, insbesondere mit einer Aufhebung von Wellenverbindungen an der Schnittstelle 12.

Entsprechend vorhandene Kontakt- bzw. Verbindungsanordnungen zur Wirkverbindung an der Schnittstelle 12 zwischen

Antriebskomponenten im Antriebsblock 15 und mit diesen anzutreibenden Wellen und dergleichen, welche innen im Durchführelement 4 durchführend untergebracht sind und mit dem Arbeitsarm 2 gekoppelt sind, sind in den Figuren nicht dargestellt.

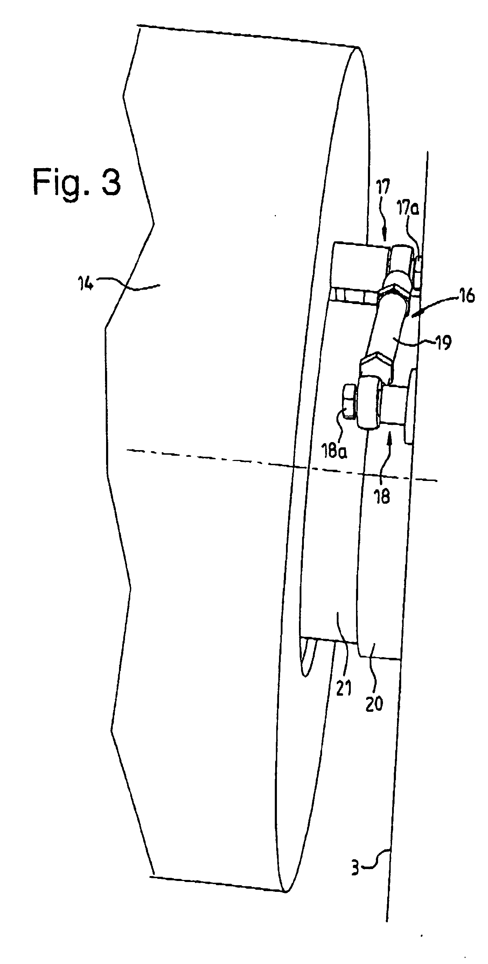

Insbesondere aus Figur 2 und 3 wird deutlich, dass ein freier Abstand zwischen dem fest aufgenommenem, nicht drehenden Antriebsgehäuse 14 und dem drehbaren Anschlussabschnitt 21 ausgebildet ist.

Weiter ist ersichtlich, dass der Antriebsblock 15 stirnseitig einen im Durchmesser reduzierten Anschlussabschnitt 21 aufweist, welcher mit der Verlängerung 20 des Durchführelements 4 drehfest lösbar verbunden ist. Für eine leichtere Montage und Demontage der Antriebseinheit 1 bzw. zur Einrichtung der Drehmomentstützenanordnung 16 ragt sowohl die Verlängerung 20 in die kalte Zelle 9 überstehend zum Verbindungsabschnitt 13 hinein, als auch der Anschlussabschnitt 21 über einen stirnseitigen Abschnitt 14a des Antriebsgehäuses 14. So wird ein gewünschter Abstand zwischen der Wand 3 und dem Abschnitt 14a realisiert.

Gegenüberliegend zum vorderen stirnseitigen Abschnitt 14a ist das Antriebsgehäuse 14 durch einen abnehmbaren bzw. ansetzbaren Gehäusedeckel 14b verschlossen. Im Antriebsfall dreht der Antriebsblock 15 aufgrund seiner Verbindung mit dem drehgelagerten Durchführelement 4 gemeinsam um die Achse S1. Die wesentliche Abstützung des Antriebsblocks 15 erfolgt durch die beiden nicht dargestellten Drehlageranordnungen des Durchführelements 4 relativ zum Wandrohr 5.

Zur angetriebenen Drehbewegung des Manipulatorarms 2 um die Achse S1, wird das Durchführelement 4 in Drehung versetzt, indem der Antriebsblocks 15 von einer hier als Elektromotor 22 ausgebildeten ersten Antriebskomponente drehangetrieben wird. Der Drehantrieb kann mit unterschiedlichen Geschwindigkeiten wahlweise im Rechts- oder Linkslauf erfolgen.

Der Elektromotor 22 ist außen an einem Gehäuse 23 des Antriebsblocks 15 fest positioniert vorgesehen und weist abtriebsseitig einen Wellenabschnitt 24 mit einem daran fixierten Antriebsritzel 25 auf, sodass im Antriebsfall über das Ritzel 25 eine Drehmomentübertragung auf den Antriebsblock 15 erfolgt. Dabei dreht sich der Elektromotor 22 samt Wellenabschnitt 24 und Antriebsritzel 25 mit dem Antriebsblock 15 um die Achse S1. Dabei kämmt das Ritzel 25 mit einem gegenüber dem Antriebsblock 15 feststehenden Getriebering 26, der über eine Drehlageranordnung 28 gelagert ist, wobei die Drehlageranordnung 28 bevorzugt als Wälz- oder Gleitlager ausgebildet ist. Der Getriebering 26, der mit einem Drehkranz eines Krans vergleichbar ist, ist als ringförmiger Zahnkranz mit einem umfänglich ausgebildeten Zahnabschnitt 26a ausgestaltet. Eine vom Getriebering 26 umschlossene Öffnung 27, welche radial außen auch die Drehlageranordnung 28 aufnimmt, dient zur kompakten Durchführung eines gesamten Verbindungsstrangs für ein Zusammenwirken der Antriebseinheit 1 mit dem Durchführelement 4 bzw. dem Manipulatorarm 4.

Die Drehachse des Antriebsblocks 15 fällt mit der Achse S1 zusammen, was ebenfalls im Hinblick auf eine Montage bzw. aus Platzgründen vorteilhaft ist.

Über die Drehlageranordnung 28 stützt sich der Getriebering 26 vorteilhafterweise nicht an der Wand 3 oder einem damit verbundenen Abschnitt ab, sondern am drehbaren Antriebsblock 15. Weiter ist es vorteilhaft, dass bezüglich der Achse S1 in radialer Verlängerung zur Drehlageranordnung 28 bzw. radial fluchtend der Zahnabschnitt 26a des Getrieberings 26 positioniert ist.

Somit ist eine exakte Einstellung eines Spiels zwischen dem Ritzel 25 und dem Zahnabschnitt 26a vorteilhaft möglich. Im Ergebnis lässt sich ein nahezu spielfreier und präziser Antrieb des Manipulatorarms 2 realisieren, was wiederum Voraussetzung für ein genaues Hantieren mit dem betreffenden Manipulator ist. Außerdem ist mit der vorgeschlagenen Anordnung vorteilhafterweise nur ein sehr geringer Leerlauf beim Wechsel der Bewegungsrichtung der Drehbewegung des Ritzels 25 bzw. des Antriebsblocks 15 und damit des Manipulatorarms 2 zu beobachten.

Sämtliche innerhalb des Antriebsblocks 15 vorhandene Komponenten der Antriebseinheit 1, beispielsweise Antriebskomponenten bzw. Antriebsmotoren, Getriebe, Kupplungen und/oder Sensoren und dergleichen sind nicht dargestellt. Entsprechende Abschnitte dieser Komponenten reichen durch die Öffnung 27 hindurch bis zur Schnittstelle 12 zwischen dem Anschlussabschnitt 21 und dem Verlängerungsabschnitt 20. Dort sind dann entsprechende lösbare Anschlüsse z. B. Steckkontakte zur Verbindung mit Gegenabschnitten des im Durchführelement 4 geführten Übertragungsstrangs vorhanden.

Anstelle der Anbindung des Antriebsblocks 15 bzw. des Anschlussabschnitts 21 am Anschlussabschnitt 21 ist auch eine direkte Verbindung mit dem Durchführelement 4 denkbar.

Für die Versorgung der Antriebseinheit 1 über Versorgungsleitungen wie beispielsweise zur elektrischen, hydraulischen oder pneumatischen Versorgung ist eine schematisiert gezeigte Energiekette 29 vorgesehen. Die Energiekette 29, beispielsweise eine Kabelkette, kann in drei Raumachsen beweglich sein. Die Energiekette 29 ist an einem Ende mit dem zylindrischen Gehäuse 23, welche sich mit dem Antriebsblock 15 drehen kann, und mit einem anderen Ende am Gehäusedeckel 14b außen verbunden, welcher feststeht. Damit ist die Energiekette 29 gegen Verschmutzungen und Beschädigungen geschützt und außerdem geht von der sich schlängelnd mitbewegten Energiekette 29 keine Gefahr für Personen oder andere Maschinenteile im Drehantrieb des Antriebsblocks 15 aus. Im Vergleich zu in zwei Achsen beweglichen Kabelketten kann die Energiekette 29 wesentlich kompakter gebaut werden. Insbesondere kann die Energiekette nicht störend in einen Bereich hineinragen, der vor einem häufig vorhandenen Sichtfenster in der Wand 3 liegt, sodass eine ungehinderte Sicht von der Zelle 9 in die Zelle 8 möglich ist.

Bevorzugt sind in der Antriebseinheit 1 zumindest zwei Energieketten installiert. Bevorzugt ist sowohl das Gehäuse 23 als auch das Antriebsgehäuse 14 zylinderförmig bzw. hohlzylinderförmig ausgebildet. So kann ein Verklemmen bzw. Verhaken der beweglichen Abschnitte der Energiekette 29 zwischen dem Antriebsgehäuse 14 und dem Gehäuse 23 vermieden werden.

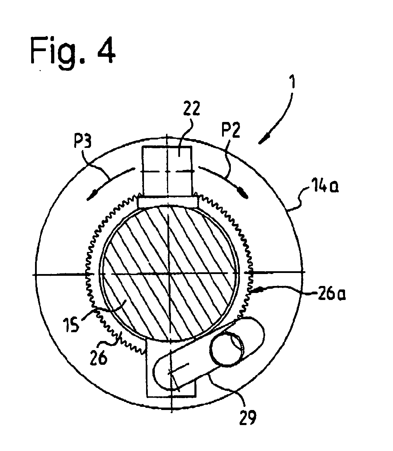

Figur 4 veranschaulicht stark schematisiert eine Ansicht gemäß Pfeil P1 in Figur 2 auf das Innere der Antriebseinheit 1 bei Weglassen des Gehäusedeckels 14b, wobei die Energiekette 29 stark schematisiert, hier beispielsweise als gebogenes offenes Rohr, gezeigt ist, indem die unterzubringenden Versorgungsleitungen weggelassen sind.

Die Verbindung der in der Energiekette 29 vorhandenen Versorgungsleitungen kann über einen Kontaktabschnitt 30 am Gehäusedeckel 14b über entsprechende Kontakte erfolgen.

Die möglichen Drehrichtungen des Antriebsblocks 15 samt Elektromotor 22 innerhalb der Antriebseinheit 1 sind gemäß der Bewegungspfeile P2 und P3 angedeutet, wobei ausgehend von der gezeigten Position des Antriebblocks 15 in beide Richtungen eine Drehung von etwas mehr als +/- 180 Winkelgrade möglich ist.

### Bezugszeichenliste:

- 1: Antriebseinheit
- 2: Manipulatorarm
- 3: Wand
- 4: Durchführelement
- 5: wandrohr
- 6: Durchgangsöffnung
- 7: Durchlass
- 8: Zelle
- 9: Zelle
- 10: Greifeinheit
- 11: Arbeitsarm
- 12: Schnittstelle
- 13: Ring
- 14: Antriebsgehäuse
- 14a: Abschnitt
- 14b: Gehäusedeckel
- 15: Antriebsblock
- 16: Drehmomentstützenanordnung
- 17: Schraubverbindung
- 18: Schraubverbindung
- 19: Koppelglied
- 20: Verlängerung
- 21: Anschlussabschnitt
- 22: Elektromotor
- 23: Gehäuse
- 24: Wellenabschnitt
- 25: Ritzel
- 26: Getriebering
- 26a: Zahnabschnitt
- 27: Öffnung
- 28: Drehlageranordnung
- 29: Energiekette
- 30: Kontaktabschnitt

## Patentansprüche

1. Vorrichtung mit einer Antriebseinheit (1) zum Antrieb eines Manipulatorarms (2) eines Manipulators, wobei der Manipulatorarm (2) und die Antriebseinheit (1) im Betrieb des Manipulators durch einen Trennabschnitt (3) getrennt sind, durch welchen sich ein drehbares Durchführelement (4) des Manipulators zur Kopplung der Antriebseinheit (1) mit dem Manipulatorarm (2) erstreckt, wobei die Antriebseinheit (1) mehrere Antriebskomponenten umfasst, **und wobei** ein Antriebsblock (15) der Antriebseinheit (1) derart ausgebildet ist, dass der Antriebsblock (15) an dem Durchführelement (4) und/oder einer Verlängerung (20) des Durchführelements (4) fest aufnehmbar ist und im zusammengebauten Zustand des Manipulators der Antriebsblock (15) und das Durchführelement (4) durch einen Drehantrieb des Antriebsblocks (15) gemeinsam drehbar sind, wobei ein Getriebe zur Übertragung einer Drehbewegung auf den Antriebsblock (15) einen drehfest positionierten Getriebering (26) umfasst, **dadurch gekennzeichnet, dass eine Lageranordnung (28) zur Lagerung des drehfast positionierten Getrieberings (26) relativ zum Antriebsblock (15) vorgesehen ist.**

2. Vorrichtung nach Anspruch 1, **dadurch gekennzeichnet, dass** die Antriebseinheit (1) einen feststehenden Gehäuseabschnitt (14, 14a, 14b) und einen gegenüber dem Gehäuseabschnitt (14, 14a, 14b) drehbar gelagerten Antriebsblock (15) umfasst, wobei eine räumlich bewegbare Versorgungsführung (29) für eine oder mehrere Versorgungsleitungen zur Versorgung der Antriebseinheit (1) vorgesehen ist und wobei ein Ende der Versorgungsführung (29) an dem Antriebsblock (15) und ein anderes Ende der Versorgungsführung (29) an dem Gehäuseabschnitt (14b) fixiert ist.

3. Vorrichtung nach einem der vorhergehenden Ansprüche, **dadurch gekennzeichnet, dass** sämtliche Antriebskomponenten der Antriebseinheit (1) am oder im Antriebsblock (15) vorhanden sind.

4. Vorrichtung nach einem der vorhergehenden Ansprüche, **dadurch gekennzeichnet, dass** zur Übertragung einer Drehbewegung auf den Antriebsblock (15) ein von einer ersten Antriebskomponente (22) des Antriebsblocks (15) antreibbares Ritzel (25) vorhanden ist, das für eine Drehmomentübertragung auf den Antriebsblock (15) am Getriebering (26) abrollt.

5. Vorrichtung nach einem der vorhergehenden Ansprüche, **dadurch gekennzeichnet, dass** der Getriebering (26) eine Öffnung (27) bereitstellt, durch welche sich ein Verbindungsstrang zur Kopplung der Antriebseinheit (1) mit dem Durchführelement (4) erstreckt.

6. Vorrichtung nach einem der vorhergehenden Ansprüche, **dadurch gekennzeichnet, dass** der Getriebering (26) einen Zahnkranz (26a) umfasst, an dem bei der Drehbewegung des Antriebsblocks (15) das antreibbare Ritzel (25) abrollt.

7. Vorrichtung nach einem der vorhergehenden Ansprüche, **dadurch gekennzeichnet, dass** der Antriebsblock (15) ein Gehäuse (23) aufweist, an dem außen die erste Antriebskomponente (22) vorhanden ist und innerhalb des Gehäuses (23) die sämtlichen weiteren Antriebskomponenten untergebracht sind.

8. Vorrichtung nach einem der vorhergehenden Ansprüche, **dadurch gekennzeichnet, dass** in einem Zwischenraum zwischen dem Gehäuseabschnitt (14) der Antriebseinheit (1) und dem Gehäuse (23) des Antriebsblocks (15) die Versorgungsführung (29) untergebracht ist.

9. Vorrichtung nach einem der vorhergehenden Ansprüche, **dadurch gekennzeichnet, dass** der Getriebering (26) über die Lageranordnung (28) derart ausgenommen ist, dass eine Kontaktfläche des Getrieberings (26), die bei der Drehbewegung des Antriebsblocks (15) mit dem Ritzel (25), das von der ersten Antriebskomponente (22) antreibbar ist, in Kontakt steht, in radialer Verlängerung zur Lageranordnung (28) positioniert ist.

10. Vorrichtung nach einem der vorhergehenden Ansprüche, **dadurch gekennzeichnet, dass** eine mit Gelenkmitteln versehene Drehmomentstütze (16) für eine Abstützung der Antriebseinheit (1) an einem feststehenden Abstützabschnitt vorgesehen ist, mit welcher im montierten Zustand der Antriebseinheit (1) eine geringe Ausgleichbewegung zwischen der Antriebseinheit (1) relativ zu dem Abstützabschnitt möglich ist.

11. Manipulator mit einem Manipulatorarm (2) und einer Antriebseinheit (1) zum Antrieb des Manipulatorarms (2), wobei der Manipulatorarm (2) und die Antriebseinheit (1) im Betrieb des Manipulators durch einen Trennabschnitt (3) getrennt sind, durch welchen sich ein Durchführelement (4) des Manipulators zur Kopplung der Antriebseinheit (1) mit dem Manipulatorarm (2) erstreckt, **dadurch gekennzeichnet, dass** eine Vorrichtung nach einem der vorhergehenden Ansprüche vorhanden ist.

## Claims

1. Device with a drive unit (1) for driving a manipulator arm (2) of a manipulator, wherein the manipulator arm (2) and the drive unit (1) during operation of the manipulator are separated by means of a separation section (3) through which extends a rotatable lead-through element (4) of the manipulator for coupling the drive unit (1) to the manipulator arm (2), wherein the drive unit (1) comprises a plurality of drive components, and wherein a drive block (15) of the drive unit (1) is designed in such a way that the drive block (15) can be fixedly mounted on the lead-through element (4) and/or on an extension (20) of the lead-through element (4) and in the assembled state of the manipulator the drive block (15) and the lead-through element (4) can be rotated together by means of a rotary drive of the drive block (15), wherein a gear for transmitting a rotary movement to the drive block (15) comprises a gear ring (26) which is positioned in a rotation-resistant manner, **characterized in that** a bearing arrangement (28) is provided for supporting the gear ring (26), which is positioned in a rotation-resistant manner, relative to the drive block (15).

2. Device according to Claim 1, **characterized in that** the drive unit (1) comprises a stationary housing section (14, 14a, 14b) and a drive block (15) which Is rotatably mounted in relation to the housing section (14, 14a, 14b), wherein provision is made for a spatially movable supply duct (29) for a supply line, or for a plurality of supply lines, for the supplying the drive unit (1) and wherein one end of the supply duct (29) Is fixed on the drive block (15) and another end of the supply duct (29) is fixed on the housing section (14b).

3. Device according to one of the preceding claims, **characterized in that** all the drive components of the drive unit (1) are provided on, or in, the drive block (15),

4. Device according to one of the preceding claims, **characterized in that** for transmitting a rotary movement to the drive block (15), provision is made for a pinion (25) which can be driven by a first drive component (22) of the drive block (15) and which for transmitting torque to the drive block (15) rolls on the gear ring (26).

5. Device according to one of the preceding claims, **characterized in that** the gear ring (26) provides an opening (27) through which extends a connecting train for coupling the drive unit (1) to the lead-through element (4).

6. Device according to one of the preceding claims, **characterized in that** the gear ring (26) comprises a toothed ring (26a) on which the drivable pinion (25) rolls during the rotary movement of the drive block (15).

7. Device according to one of the preceding claims, **characterized In that** the drive block (15) has a housing (23), on the outside of which is provision is made for the first drive component (22), with all the other drive components being accommodated inside the housing (23).

8. Device according to one of the preceding claims, **characterized in that** the supply duct (29) is accommodated in a space between the housing section (14) of the drive unit (1) and the housing (23) of the drive block (15).

9. Device according to one of the preceding claims, **characterized in that** the gear ring (26) is supported via the bearing arrangement (28) in such a way that a contact surface of the gear ring (26), which during the rotary movement of the drive block (15) is in contact with the pinion (25) which can be driven by the first drive component (22), Is positioned in the radial extension of the bearing arrangement (28).

10. Device according to one of the preceding claims, **characterized in that** a torque counteracting support (16), which is provided with articulation means, is provided for supporting the drive unit (1) on a stationary support section, with which a small compensating movement between the drive unit (1) and the support section is possible in the installed state of the drive unit (1).

11. Manipulator with a manipulator arm (2) and a drive unit (1) for driving the manipulator arm (2), wherein the manipulator arm (2) and the drive unit (1) during operation of the manipulator are separated by means of a separation section (3) through which extends a lead-through element (4) of the manipulator for coupling the drive unit (1) to the manipulator arm (2), **characterized in that** provision is made for a device according to one of the preceding claims.

## Revendications

1. Dispositif avec une unité d'entraînement (1) pour l'entraînement d'un bras manipulateur (2) d'un manipulateur, le bras manipulateur (2) et l'unité d'entraînement (1) étant séparés, lors du fonctionnement du manipulateur, par une section de séparation (3), à travers laquelle un élément traversant rotatif (4) du manipulateur s'étend pour l'accouplement de l'unité d'entraînement (1) avec le bras manipulateur (2), l'unité d'entraînement (1) comprenant plusieurs composants d'entraînement et un bloc d'entraînement (15) de l'unité d'entraînement (1) étant conçu de façon à ce que le bloc d'entraînement (15) puisse être logé de manière fixe au niveau de l'élément traversant (4) et/ou d'un prolongement (20) de l'élément traversant (4) et, dans l'état monté du manipulateur, le bloc d'entraînement (15) et l'élément traversant (4) sont rotatifs ensemble grâce à un entraînement rotatif du bloc d'entraînement (15), un engrenage de transmission d'un mouvement rotatif vers le bloc d'entraînement (15) comprenant une bague de transmission (26) positionnée de manière solidaire en rotation, **caractérisé en ce qu'**un dispositif à paliers (28) pour le logement de la bague de transmission (26) positionnée de manière solidaire en rotation par rapport au bloc d'entraînement (15) est prévu.

2. Dispositif selon la revendication 1, **caractérisé en ce que** l'unité de transmission (1) comprend une section de boîtier (14, 14a, 14b) fixe et un bloc d'entraînement (15) logé de manière rotative par rapport à la section de boîtier (14, 14a, 14b), un guidage d'alimentation (29) mobile dans l'espace étant prévu pour une ou deux conduites d'alimentation pour l'alimentation de l'unité d'entraînement (1) et une extrémité du guidage d'alimentation (29) étant fixée au bloc d'entraînement (15) et une autre extrémité du guidage d'alimentation (29) étant fixée à la section de boîtier (14b).

3. Dispositif selon l'une des revendications précédentes, **caractérisé en ce que** l'ensemble des composants d'entraînement du dispositif d'entraînement (1) sont prévus sur ou dans le bloc d'entraînement (15).

4. Dispositif selon l'une des revendications précédentes, **caractérisé en ce que**, pour la transmission d'un mouvement rotatif vers le bloc d'entraînement (15), un pignon (25) entraînable par un premier composant d'entraînement (22) du bloc d'entraînement (15) est prévu, qui roule sur la bague de transmission (26) pour la transmission du couple vers le bloc d'entraînement (15).

5. Dispositif selon l'une des revendications précédentes, **caractérisé en ce que** la bague de transmission (26) présente une ouverture (27) à travers laquelle s'étend une ligne de liaison pour l'accouplement de l'unité d'entraînement (1) avec l'élément traversant (4).

6. Dispositif selon l'une des revendications précédentes, **caractérisé en ce que** la bague de transmission (26) comprend une couronne dentée (26a) sur laquelle le pignon (25) entraînable roule lors du mouvement de rotation du bloc d'entraînement (15).

7. Dispositif selon l'une des revendications précédentes, **caractérisé en ce que** le bloc d'entraînement (15) comprend un boîtier (23) à l'extérieur duquel se trouve le premier composant d'entraînement (22) et l'ensemble des autres composants d'entraînement sont logés à l'intérieur du boîtier (23).

8. Dispositif selon l'une des revendications précédentes, **caractérisé en ce que**, dans un espace intermédiaire entre la section de boîtier (14) de l'unité d'entraînement (1) et le boîtier (23) du bloc d'entraînement (15), est logé le guidage d'alimentation (29).

9. Dispositif selon l'une des revendications précédentes, **caractérisé en ce que** la bague de transmission (26) est logé à l'aide du dispositif à paliers (28) de façon à ce qu'une surface de contact de la bague de transmission (26), en contact lors du mouvement de rotation du bloc d'entraînement (15), avec le pignon (25) entraînable par le premier composant d'entraînement (22), est positionnée dans le prolongement radial vers le dispositif à paliers (28).

10. Dispositif selon l'une des revendications précédentes, **caractérisé en ce qu'**un bras de suspension (16) muni d'éléments articulés est prévu pour soutenir l'unité d'entraînement (1) au niveau d'une section d'appui fixe, avec lequel, dans l'état monté de l'unité d'entraînement (1), un faible mouvement de compensation est possible entre l'unité d'entraînement (1) et la section d'appui.

11. Manipulateur avec un bras manipulateur (2) et une unité d'entraînement (1) pour l'entraînement d'un bras manipulateur (2), le bras manipulateur (2) et l'unité d'entraînement (1) étant séparés, lors du fonctionnement du manipulateur, par une section de séparation (3), à travers laquelle s'étend un élément traversant (4) du manipulateur pour l'accouplement de l'unité d'entraînement (1) avec le bras manipulateur (2), **caractérisé en ce qu'**un dispositif selon l'une des revendications précédentes est prévu.
